# EUROPEAN PATENT SPECIFICATION

(11) **EP 2 798 215 B1**
(45) Date of publication and mention of the grant of the patent: **14.10.2015**
(21) Application number: 12794703.4
(22) Date of filing: 29.11.2012
(51) Int. Cl.: F04B 39/00, F04B 39/12, F04C 23/00, F16L 37/14

(54) **A COMPRESSOR COMPRISING A CONNECTION MEMBER**
VERDICHTER MIT EINEM VERBINDUNGSELEMENT
COMPRESSEUR COMPRENANT UN ÉLÉMENT DE RACCORD

(30) Priority: 26.12.2011 TR 201112947
(43) Date of publication of application: 05.11.2014
(73) Proprietor: Arçelik Anonim Sirketi, 34950 Istanbul (TR)
(72) Inventor: YESILAYDIN, Ismail, 34950 Istanbul (TR); KAYA, Atilla, 34950 Istanbul (TR); KARA, Serkan, 34950 Istanbul (TR)
(86) International application number: PCT/EP2012/073885
(87) International publication number: WO 2013/098021

(56) References cited:
- EP-A2- 1 705 417
- EP-A2- 2 339 178
- WO-A1-2006/067218
- JP-A- 6 050 483
- JP-A- 8 219 352
- US-A- 4 793 775

## Description

The present invention relates to a compressor comprising a connection member.

In the hermetic compressors used in cooling devices, a suction muffler made from plastic material is used for attenuating the noise originating from the circulating fluid. The refrigerant vapor at low pressure and temperature coming from the evaporator enters the suction muffler after being received into the compressor casing. In the meantime, the fluid that mixes with the gases at high temperature in the casing reaches the cylinder being heated and causes the efficiency to decrease. In order to prevent this problem, resilient connection members are disposed between the casing inlet and the suction muffler and the refrigerant fluid is provided to be delivered to the suction muffler or the suction space in the cylinder head without mixing with the high temperature gases in the casing.

In embodiments wherein the refrigerant fluid is delivered directly to the cylinder or the suction muffler by the connection member, the vibrations of the components like the motor, crankshaft, piston rod inside the casing can be transmitted to the casing through the connection member. The connection members should be produced from leak-proof and elastic material in order to attenuate vibrational movements and to be able to function in a high temperature environment like the inner volume of the casing for a long period of time. The resilient connection pipes are connected to a rigidly structured pipe in the compressor and gets loose in the course of time due to operating conditions inside the compressor, causing to loose leak-proofing and decrease in compressor efficiency.

In the state of the art United States of America Patent No. US4793775, a compressor is described comprising a bellows-shaped connection duct situated between the compressor suction pipe and the muffler inlet. After one end of the connection duct is mounted to the spigot-shaped muffler inlet, the other end bears on the casing wall corresponding to the compressor suction pipe.

In the state of the art United States of America Patent Application No. US2008219863, a compressor is described comprising a connector pipe that provides the transfer of the air entering into the compressor casing directly into the suction muffler. In this embodiment, the connection pipe is provided to be mounted to the inlet of the suction muffler by fitting the inner surface of the bellows-shape connection pipe to the outer surface of the suction muffler inlet pipe and any additional fixing member is not used. In the state of the art Korean Patent No. KR100778485, a compressor comprising a connection pipe is described. In this embodiment, the connection pipe is mounted to the muffler by means of a pipe and thus the number of parts required for the connection is decreased.

JP 8 219352A discloses a snap retainer that can be mounting to a socket, wherein a fastener is provided to surround the snap retainer and to fix it on the socket.

JP 6 050483A discloses a U-like spring ring for connecting pipes by one-touch.

The aim of the present invention is the realization of a compressor wherein the decrease in effectiveness of the connection member by dislodging in the course of time is prevented.

The compressor realized in order to attain the aim of the present invention, explicated in the first claim and the respective claims thereof, comprises a connection member that extends between the opening through which the refrigerant fluid is received into the casing and the passage pipe enabling entry into the suction muffler and which provides the fluid coming from the evaporator to be delivered into the suction muffler before mixing with the air inside the casing. The connection member functions like a bridge between the opening and the passage pipe. One end of the connection member is fitted over the passage pipe, the other end bears against the inner surface of the casing so as to enclose the opening. The connection member is preferably produced from rubber. Thus, the vibrations of the movable components inside the compressor are prevented from being transmitted to the casing.

The compressor furthermore comprises a fixing member that provides the connection member to be secured on the passage pipe in a durable manner. The fixing member comprises a first node that surrounds all around the portion of the connection member fitted over the passage pipe from outside and presses towards the passage pipe providing it not to move and a second node connected to the first node. The first node is almost in the same shape as the outer periphery of the passage pipe cross-section. The second node is shaped as hollow closed curve and can be used like a handle during assembly.

The compressor comprises a stopper that provides the first node and hence the connection member to remain stationary by preventing movement of the second node. The stopper is situated in the vicinity of the passage pipe and attached to the body of the suction muffler. Preferably, the stopper, the passage pipe and the suction muffler are produced together.

The fixing member is produced by shaping a straight wire. First the second node and then the first node is formed by bending the wire and the ends of the wire are left unattached so as to extend outwards from the first node. During the assembly process, the wire is opened by holding from its ends and after passing around the periphery of the portion of the connection member on the passage pipe, is released. Since the wire is prestressed, it resumes its initial position and presses on the connection member. In this embodiment, the fixing member is symmetrical with respect to the axis that joins the center points of the first node and the second node.

The stopper is situated under the passage pipe. Movement of the fixing member is prevented by fitting the second node around the protrusion-shaped stopper that extends outwards from the body of the suction muffler. In this embodiment, the passage pipe and the stopper, the first node and the second node are positioned to be one over the other.

In an embodiment of the present invention, the connection member is shaped like a bellows widening from the suction muffler towards the casing. The portion of the connection member with a smaller diameter is shaped like a pipe fitted over the passage pipe. The connection member becomes more elastic while moving close to the casing and takes the shape of a bellows. There is a skirt portion at the outermost end of the connection member where its diameter is widest which provides leak-proofing when the connection member bears against the casing.

In an embodiment of the present invention, an extension is arranged at the end portion of the passage pipe that prevents the connection member from dislodging after being fitted over the passage pipe. In this embodiment, the extension is shaped as a truncated cone.

In an embodiment of the present invention, a channel is situated at the portion of the connection member whereon the first node is placed. The fixing member is prevented from moving in the axial direction by means of the channel disposed on the portion of the connection member fitted over the passage pipe. In a version of this embodiment, the diameters of the portions of the connection member prior to and after the channel are almost the same as the base diameter of the extension which is wider. In this embodiment, the diameter of the portion of the connection member coinciding with the level of the channel is almost the same as the diameter of the passage pipe. Accordingly, while the connection member is fitted over the passage pipe, only the portion where the channel is located catches the extension and can pass over the extension due to its resilient configuration. But, dislodging thereof is not possible since it encounters with the base of the extension on the return. And this prevents dislodging of the connection member from the passage pipe.

By means of the present invention, the connection member that prevents refrigerant fluid from mixing with the gases in the casing, can be durably secured to the passage pipe on the suction muffler. Due to the configuration of the fixing member, the movement of the connection member in the course of time and hence decrease in compressor efficiency are prevented.

The compressor realized in order to attain the aim of the present invention is illustrated in the attached figures, where:
Figure 1 - is the partial view of a compressor.
Figure 2 - is the top partial view of the compressor.
Figure 3 - is the view of the cross-section A-A in Figure 2.
Figure 4 - is the sideways view of the suction muffler, the connection member and the fixing member.
Figure 5 - is the view of cross section B-B in Figure 4.
Figure 6 - is the perspective view of the suction muffler, the connection member and the fixing member before being mounted.
Figure 7 - is the perspective view of the suction muffler, the connection member and the fixing member after being mounted.

The elements illustrated in the figures are numbered as follows:
1. Compressor
2. Casing
3. Inlet pipe
4. Opening
5. Suction muffler
6. Passage pipe
7. Connection member
8. Fixing member
9. First node
10. Second node
11. Stopper
12. Extension
13. Channel

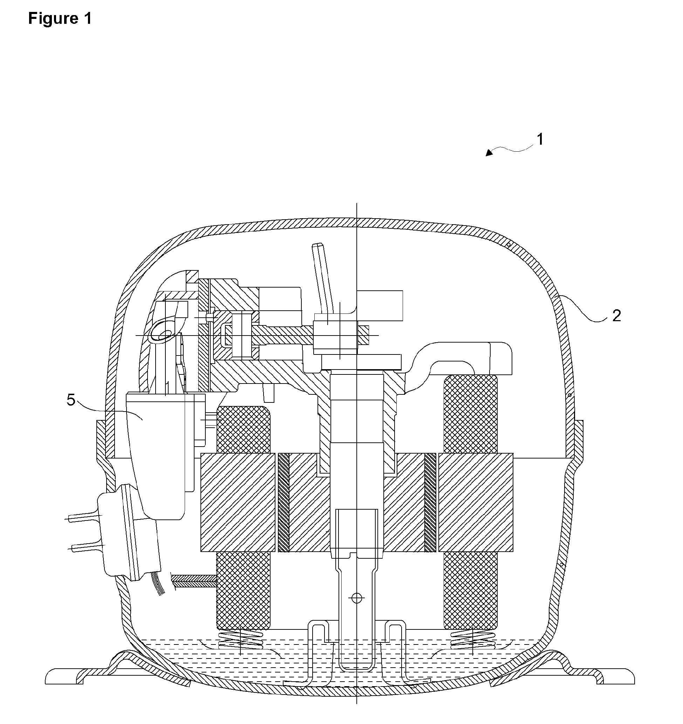

The compressor (1) comprises a casing (2) supporting the members therein and wherein oil lubricating the movable components is placed, an inlet pipe (3) that is disposed on the casing (2) and that provides the refrigerant coming from the evaporator to be received into the casing (2), an opening (4) arranged where the inlet pipe (3) is mounted to the casing (2), providing the fluid flowing from the inlet pipe (3) to enter into the casing (2), a suction muffler (5) disposed inside the casing (2), providing the noise originating from the refrigerant fluid to be attenuated, a passage pipe (6) disposed on the suction muffler (5), enabling the refrigerant fluid to be received into the suction muffler (5) and a resilient connection member (7) providing the refrigerant fluid to be delivered directly into the suction muffler (5), with one end secured to the passage pipe (6), the other end bearing against the inner surface of the casing (2) so as to surround the opening (4) (Figure 1, Figure 2, Figure 3, Figure 4).

During the refrigeration cycle, the refrigerant fluid coming from the evaporator is received into the compressor (1) by means of the opening (4) by passing through the inlet pipe (3) on the casing (2). Since one end of the connection member (7) applies pressure leak-proofingly on the inner surface of the casing (2) by surrounding the opening (4) all around, the refrigerant fluid is prevented from mixing with the air inside the casing (2) and is provided to be transferred directly into the suction muffler (5) by means of the connection member (7), the other end of which is connected to the passage pipe (6).

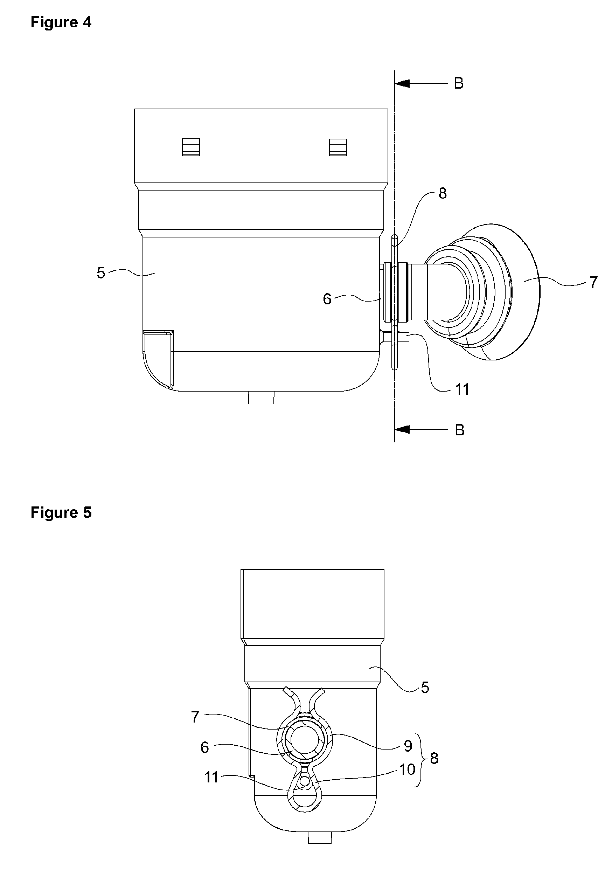

The compressor (1) of the present invention comprises
- a fixing member (8) disposed on the portion of the connection member (7) fitted over the passage pipe (6) and which provides the connection member (7) to be secured on the passage pipe (6), having a first node (9) wound around the connection member (7) and a second node (10) extending outwards from the first node (9) and
- a stopper (11) disposed around the passage pipe (6), that prevents the movement of the second node (10) in the radial direction (Figure 5, Figure 6, Figure 7).

Dislodging of the connection member (7) from the passage pipe (6) is prevented by pressing the connection member (7) onto the passage pipe (6) by means of the first node (9). The second node (10) functions like a handle during the assembly process. The stopper (11) prevents the second node (10) hence the fixing member (8) and the connection member (7) held by fixing member (8) from making rotational movements. Thus, dislodging of the connection member (7) from the passage pipe (6) in the course of time and/or changing shape by rotating around the passage pipe (6) is prevented. And this provides protection of leak-proofing and decrease in efficiency of the compressor (1) is prevented.

In an embodiment of the present invention, the fixing member (8) is a wire, the ends of which extend outwards from the endpoint of the first node (9). First the second node (10) and afterwards the first node (9) is formed by bending a straight wire. During assembly, the orifice of the first node (9) is opened by pulling from the ends of the fixing member (8) and the first node (9) is mounted on the connection member (7) so as to be fitted over the portion of the connection member (7) that is over the passage pipe (6). In this embodiment, the wire used is prestressed. Thus, after being fitted over the passage pipe (6) by being opened from its ends, the wire applies pressure on the passage pipe (6) when released and prevents the connection member (7) from getting loose. Ease of production and cost advantage are provided by means of the fixing member (8) being a wire (Figure 5, Figure 6, Figure 7).

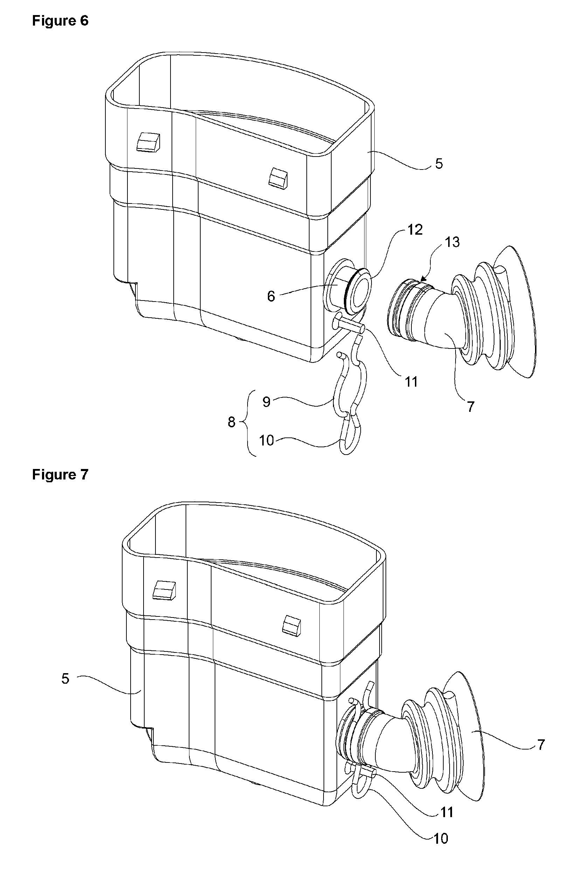

In an embodiment of the present invention, the compressor (1) comprises the protrusion-shaped stopper (11) disposed under the passage pipe (6) and the second node (10) shaped as a hollow curve that is fitted over the stopper (11). In this embodiment, after the fixing member (8) is mounted on the connection member (7), the second node (10) is fitted around the stopper (11). The stopper (11) extends outwards from the empty section in the center of the second node (10). The second node (10) stops by impacting the stopper (11) at the moment it would make rotational movement due to operating conditions of the compressor (1). Thus, the fixing member (8) is prevented from changing position and/or shape (Figure 5, Figure 7).

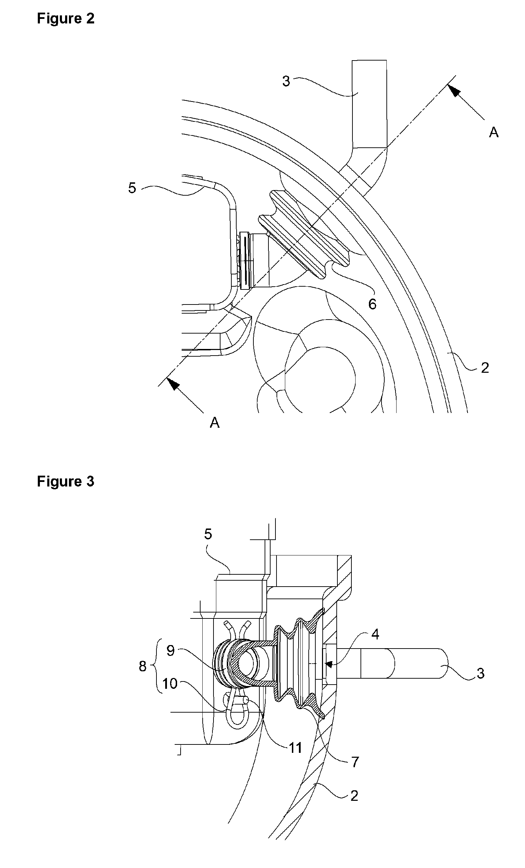

In an embodiment of the present invention, the connection member (7) is shaped as a bellows with widening diameter from the passage pipe (6) towards the opening (4). Thus, the refrigerant fluid is gradually compressed while entering into the suction muffler (5). Furthermore, the vibrations generated by the movable components like the motor, crankshaft, piston rod are attenuated due to the bellows-shaped structure and are prevented from being transmitted to the casing (2) (Figure 3, Figure 6, Figure 7).

In an embodiment of the present invention, the compressor (1) comprises a frustoconical extension (12) disposed at the end of the passage pipe (6), the diameter of which gets wider upon getting closer to the body of the suction muffler (5) and the base diameter being greater than the diameter of the passage pipe (6). By means of the extension (12), the resilient connection member (7) is not dislodged after being seated on the passage pipe (6) by passing over the extension (12) (Figure 6).

In an embodiment of the present invention, the compressor (1) comprises a channel (13) that remains on the portion of the connection member (7) between the extension (12) and the body of the suction muffler (5) when the connection member (7) is mounted on the passage pipe (6) and whereon the fixing member (8) is disposed. The channel (13) prevents the fixing member (8) from sliding on the connection member (7) and provides a durable connection. In a version of this embodiment, the diameter of the connection member (7) at the level of the channel (13) is smaller than the base diameter of the extension (12). Thus, the connection member (7) is prevented from dislodging from the passage pipe (6) (Figure 6).

By means of the present invention, the refrigerant fluid used in the refrigeration cycle is received directly into the connection member (7) through the opening (4) after passing through the inlet pipe (3) and is directly guided into the suction muffler (5) without mixing with the air inside the casing (2). Accordingly, the thermodynamic efficiency of the compressor (1) is increased by minimizing the heat exchange of the refrigerant fluid with the environment during its transfer. By means of the fixing member (8), the connection member (7) is tightly fastened on the passage pipe (6) and is prevented from losing functionality by dislodging in the course of time.

It is to be understood that the present invention is not limited to the embodiments disclosed above and a person skilled in the art can easily introduce different embodiments. These should be considered within the scope of the protection postulated by the claims of the present invention.

## Claims

1. A compressor (1) comprising a casing (2) supporting the members therein and wherein oil lubricating the movable components is placed, an inlet pipe (3) that is disposed on the casing (2) and that provides the refrigerant coming from the evaporator to be received into the casing (2), an opening (4) arranged where the inlet pipe (3) is mounted to the casing (2), providing the fluid flowing from the inlet pipe (3) to enter into the casing (2), a suction muffler (5) disposed inside the casing (2), providing the noise originating from the refrigerant fluid to be attenuated, a passage pipe (6) disposed on the suction muffler (5), enabling the refrigerant fluid to be received into the suction muffler (5), a resilient connection member (7) providing the refrigerant fluid to be delivered directly to the suction muffler (5), with one end secured to the passage pipe (6), the other end bearing against the inner surface of the casing (2) so as to surround the opening (4), **characterized by**
- a fixing member (8) mounted on the portion of the connection member (7) fitted over the passage pipe (6) and providing the connection member (7) to be secured on the passage pipe (6), having a first node (9) wound around the connection member (7) and a second node (10) extending outwards from the first node (9) and
- a protrusion-shaped stopper (11) disposed in the vicinity of the passage pipe (6), that prevents the movement of the second node (10) in the radial direction,
wherein the fixing member (8) is a wire, the ends of which extend outwards from the endpoint of the first node (9),
and wherein the protrusion-shaped stopper (11) is disposed under the passage pipe (6) and the second node (10) is shaped as hollow curve and fitted around the protrusion-shaped stopper (11).

2. A compressor (1) as in any one of the above Claims, **characterized by** the connection member (7) shaped like a bellows, the diameter of which widens from the passage pipe (6) towards the opening (4).

3. A compressor (1) as in any one of the above Claims, **characterized by** a frustoconical extension (12) disposed at the end of the passage pipe (6), the diameter of which gets wider upon getting closer to the body of the suction muffler (5) and the base diameter being greater than the diameter of the passage pipe (6).

4. A compressor (1) as in any one of the above Claims, **characterized by** a channel (13) that remains on the portion of the connection member (7) between the extension (12) and the body of the suction muffler (5) when the connection member (7) is mounted on the passage pipe (6) and whereon the fixing member (8) is disposed.

## Patentansprüche

1. Kompressor (1), umfassend ein Gehäuse (2), das die darin angeordneten Elemente trägt und in dem Öl zum Schmieren der beweglichen Bauteile aufgenommen ist, ein Einlassrohr (3), das am Gehäuse (2) angeordnet ist und dafür sorgt, dass das Kältemittel, das von dem Verdampfer kommt, im Gehäuse (2) aufgenommen wird, eine Öffnung (4), die dort angeordnet ist, wo das Einlassrohr (3) am Gehäuse (2) angebracht ist, und dafür sorgt, dass das Fluid vom Einlassrohr (3) in das Gehäuse (2) eintritt, einen Ansaugdämpfer (5), der im Gehäuse (2) angeordnet ist und dafür sorgt, dass vom Kältefluid ausgehende Geräusche abgeschwächt werden, ein Durchlassrohr (6), das am Ansaugdämpfer (5) angeordnet ist und es ermöglicht, dass das Kältefluid im Ansaugdämpfer (5) aufgenommen wird, ein elastisches Verbindungselement (7), das dafür sorgt, dass das Kältefluid direkt an den Ansaugdämpfer (5) geleitet wird, wobei ein Ende am Durchlassrohr (6) gesichert ist und das andere Ende an der Innenfläche des Gehäuses (2) anliegt, derart, dass es die Öffnung (4) umgibt, **gekennzeichnet durch**
- ein Befestigungselement (8), das an dem Abschnitt des Verbindungselements (7) angebracht ist, der über das Durchlassrohr (6) gesetzt ist, und dafür sorgt, dass das Verbindungselement (7) am Durchlassrohr (6) gesichert wird, mit einem ersten Knoten (9), der um das Verbindungselement (7) gewunden ist, und einem zweiten Knoten (10), der sich vom ersten Knoten nach außen erstreckt, und
- einen vorsprungförmigen Anschlag (11), der in der Nähe des Durchlassrohrs (6) angeordnet ist und die Bewegung des zweiten Knotens (10) in radialer Richtung verhindert,
wobei das Befestigungselement (8) ein Draht ist, dessen Enden sich vom Endpunkt des ersten Knotens (9) nach außen erstrecken,
und wobei der vorspmngförmige Anschlag (11) unter dem Durchlassrohr (6) angeordnet ist und der zweite Knoten (10) als hohle Krümmung geformt ist und um den vorsprungförmigen Anschlag (11) herum angeordnet ist.

2. Kompressor (1) nach einem der vorangehenden Ansprüche, **dadurch gekennzeichnet, dass** das Verbindungselement (7) blasebalgartig geformt ist und sich sein Durchmesser vom Durchlassrohr (6) zur Öffnung (4) hin erweitert.

3. Kompressor (1) nach einem der vorangehenden Ansprüche, **gekennzeichnet durch** eine kegelstumpfförmige Verlängerung (12), die am Ende des Durchlassrohrs (6) angeordnet ist und deren Durchmesser mit zunehmender Nähe zum Körper des Ansaugdämpfers (5) zunimmt und deren Basisdurchmesser größer als der Durchmesser des Durchlassrohrs (6) ist.

4. Kompressor (1) nach einem der vorangehenden Ansprüche, **gekennzeichnet durch** einen Kanal (13), der an dem Abschnitt des Verbindungselements (7) zwischen der Verlängerung (12) und dem Körper des Ansaugdämpfers (5) bleibt, wenn das Verbindungselement (7) am Durchlassrohr (6) angebracht ist, und an dem das Befestigungselement (8) angeordnet ist.

## Revendications

1. Un compresseur (1) comprenant un corps (2) supportant les éléments y situés et dans lequel l'huile graissant les éléments mobiles est placée, un tuyau d'entrée (3) qui est disposé sur le corps (2) et qui permet au fluide frigorigène venant de l'évaporateur d'être reçu dans le corps (2), une ouverture (4) qui est arrangée à l'endroit où le tuyau d'entrée (3) est monté au corps (2), permettant au fluide écoulant à travers le tuyau d'entrée (3) d'entrer dans le corps (2), un silencieux d'aspiration (5) qui est disposé dans le corps (2) et qui permet l'atténuation du bruit généré par le fluide frigorigène, un tuyau de passage (6) qui est disposé sur le silencieux d'aspiration (5) et qui permet au fluide frigorigène d'être reçu dans le silencieux d'aspiration (5), un élément de connexion élastique (7) permettant au fluide frigorigène d'être délivré directement au silencieux d'aspiration (5), dont l'une extrémité est fixée au tuyau de passage (6) et l'autre extrémité s'appuie sur la surface intérieure du corps (2) de manière à entourer l'ouverture (4), **caractérisé par**
- un élément de fixation (8) qui est monté sur la partie de l'élément de connexion (7) placée sur le tuyau de passage (6) et qui permet la fixation de l'élément de connexion (7) sur le tuyau de passage (6), présentant un premier noeud (9) enroulé autour l'élément de connexion (7) et un deuxième noeud (10) s'étendant vers l'extérieur à partir du premier noeud (9) et
- une butée en forme de protubérance (11) qui est disposée à proximité du tuyau de passage (6) et qui empêche le mouvement du deuxième noeud (10) dans la direction radiale,
où l'élément de fixation (8) est un fil, dont les extrémités s'étendent vers l'extérieur à partir du bout du premier noeud (9),
et où la butée en forme de protubérance (11) est disposée sous le tube de passage (6) et le deuxième noeud (10) est formé comme une courbe creuse et placé autour de la butée en forme de protubérance (11).

2. Un compresseur (1) selon l'une quelconque des revendications précédentes, **caractérisé par** l'élément de connexion (7) formé comme un soufflet, dont le diamètre s'élargit à partir du tuyau de passage (6) vers l'ouverture (4).

3. Un compresseur (1) selon l'une quelconque des revendications précédentes, **caractérisé par** une extension frusto-conique (12) qui est disposée à l'extrémité du tuyau de passage (6), dont le diamètre s'élargit lorsque l'on se rapproche le corps du silencieux d'aspiration (5) et le diamètre de base est supérieur au diamètre du tuyau de passage (6).

4. Un compresseur (1) selon l'une quelconque des revendications précédentes, **caractérisé par** un canal (13) qui reste sur la partie de l'élément de connexion (7) entre l'extension (12) et le corps du silencieux d'aspiration (5) lorsque l'élément de connexion (7) est monté sur le tuyau de passage (6), et sur lequel l'élément de fixation (8) est disposé.
